# FASCICULE DE BREVET EUROPEEN

(11) **EP 0 498 727 B1**
(45) Date de publication et mention de la délivrance du brevet: **20.09.1995**
(21) Numéro de dépôt: 92400304.9
(22) Date de dépôt: 06.02.1992
(51) Int. Cl.: G05F 3/30, H02J 7/14

(54) **Circuit générateur d'une tension de référence variable en fonction de la température, notamment pour régulateur de la tension de charge d'une batterie par un alternateur**
Schaltung, die eine temperaturabhängige Referenzspannung produziert, vor allem zur Regulierung der Batterieladungsspannung von einem Wechselstromgenerator
Circuit generating a temperature dependent reference voltage, especially to control the battery charge voltage from a generator

(30) Priorité: 07.02.1991 FR 9101377
(43) Date de publication de la demande: 12.08.1992
(73) Titulaire: VALEO EQUIPEMENTS ELECTRIQUES MOTEUR, 94000 Créteil (FR)
(72) Inventeur: Pierret, Jean-Marie, F-75012 Paris (FR); Canitrot, Didier, F-94100 Saint-Maur des Fosses (FR)
(74) Mandataire: Martin, Jean-Jacques

(56) Documents cités:
- EP-A- 0 189 885
- WO-A-91/00635
- US-A- 3 851 241
- US-A- 4 636 710
- IEEE TRANSACTIONS ON CONSUMER ELECTRONICS, vol. CE-26, no. 3, Août 1980, pages 211 - 222; New York, US; P. MENNITI et al.: "A new voltage regulator protects the automotive electronics"

## Description

La présente invention concerne d'une façon générale les circuits régulateurs pour alternateurs dans des véhicules automobiles ou analogues.

Il est bien connu d'assurer la régulation de la tension de charge d'une batterie de véhicule en commandant le courant d'excitation de l'alternateur en fonction du résultat de la comparaison entre la tension effective de sortie de l'alternateur et une tension de référence donnée.

La tension de référence peut être constante, mais il s'est avéré souhaitable dans certains cas de faire varier cette tension en fonction de la température.

Dans un circuit de type classique pour obtenir une tension de référence qui varie de façon linéaire et décroissante en fonction de la température, la pente et la hauteur de la droite exprimant la valeur de la tension de référence en fonction de la température nécessite de fixer par calcul ou par expérimentation des valeurs spécifiques pour au moins trois résistances du montage.

On comprend donc qu'un tel circuit se prête mal à une intégration dans une puce de silicium, surtout si l'on souhaite que le circuit puisse être paramétré pour différentes courbes caractéristiques de tension de référence en fonction de la température. En effet, si N est le nombre de courbes possibles, il est alors nécessaire de prévoir 3xN résistances, en association avec des fusibles actionnés depuis l'extérieur. L'encombrement et le coût du circuit intégré sont alors accrus de façon indésirable.

La présente invention vise principalement à pallier cet inconvénient de la technique antérieure, et à proposer un circuit générateur de tension de référence variable dans lequel on puisse choisir une courbe caractéristique parmi une pluralité d'une manière extrêmement simple et économique.

Un autre objet de l'invention est de réduire le nombre de résistances et de fusibles pour obtenir un nombre donné de pentes possibles.

L'invention concerne à cet effet un circuit générateur d'une tension de référence variable en fonction de la température, notamment pour un dispositif régulateur de la tension de charge d'une batterie par un alternateur, tel que défini dans la revendication 1.

Des aspects préférés, mais non limitatifs du circuit selon l'invention sont définis dans les sous-revendications.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est un schéma d'un circuit selon une première forme de réalisation de l'invention,
la figure 2 est un graphique illustrant la courbe caractéristique de la tension de référence engendrée en fonction de la température avec le circuit de la figure 1,
la figure 3 est un schéma d'un circuit selon une deuxième forme de réalisation de l'invention,
la figure 4 est un graphique illustrant la courbe caractéristique de la tension de référence engendrée en fonction de la température avec le circuit de la figure 3,
la figure 5 est un schéma d'un circuit selon une troisième forme de réalisation de l'invention,
la figure 6 est un graphique illustrant la courbe caractéristique de la tension de référence engendrée en fonction de la température avec le circuit de la figure 5, et
la figure 7 illustre une forme de réalisation pratique possible pour une partie des circuits des figures 1, 3 et 5.

On notera préliminairement que, d'une figure à l'autre, des éléments ou parties identiques ou similaires ont été désignés par les mêmes signes de référence.

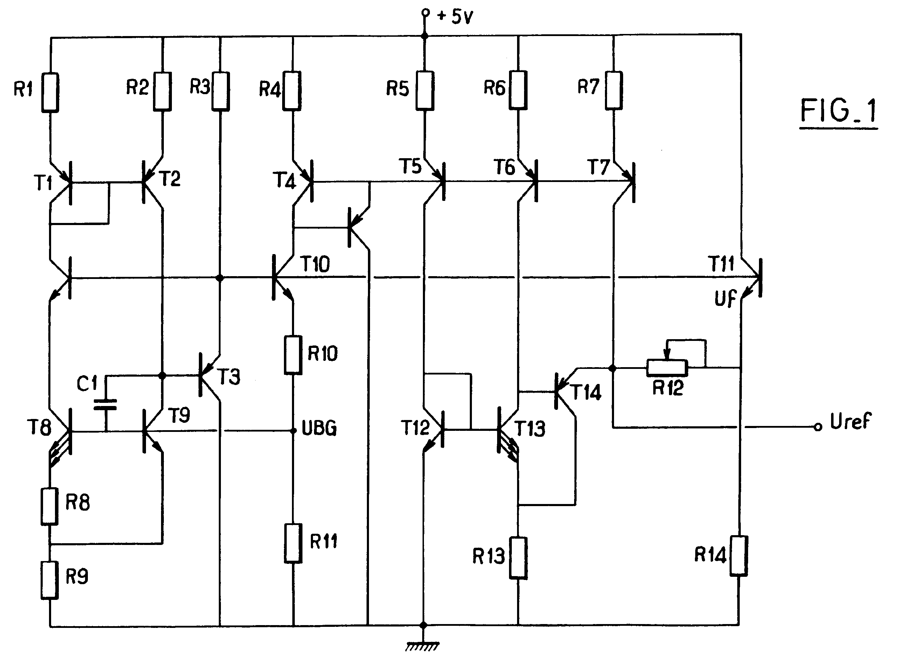

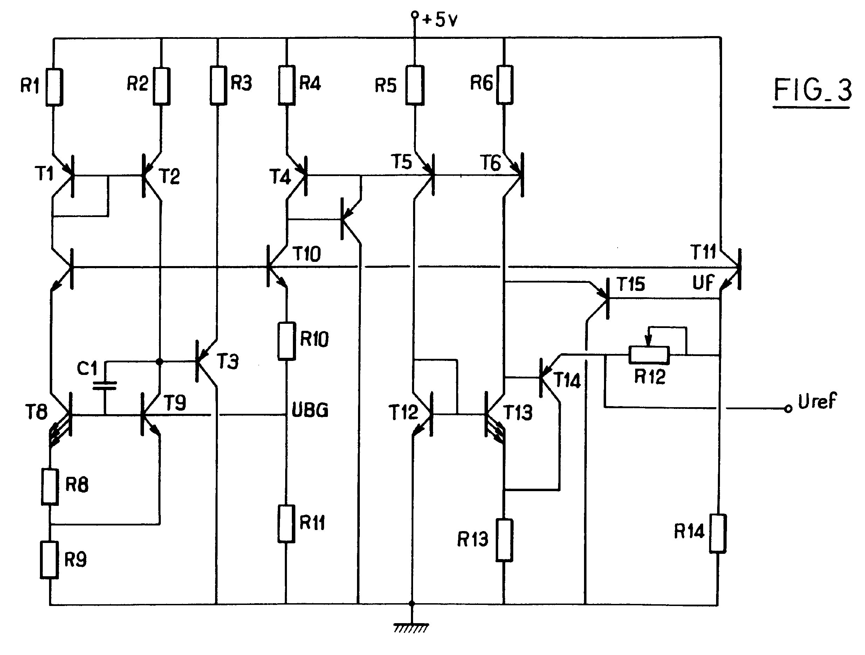

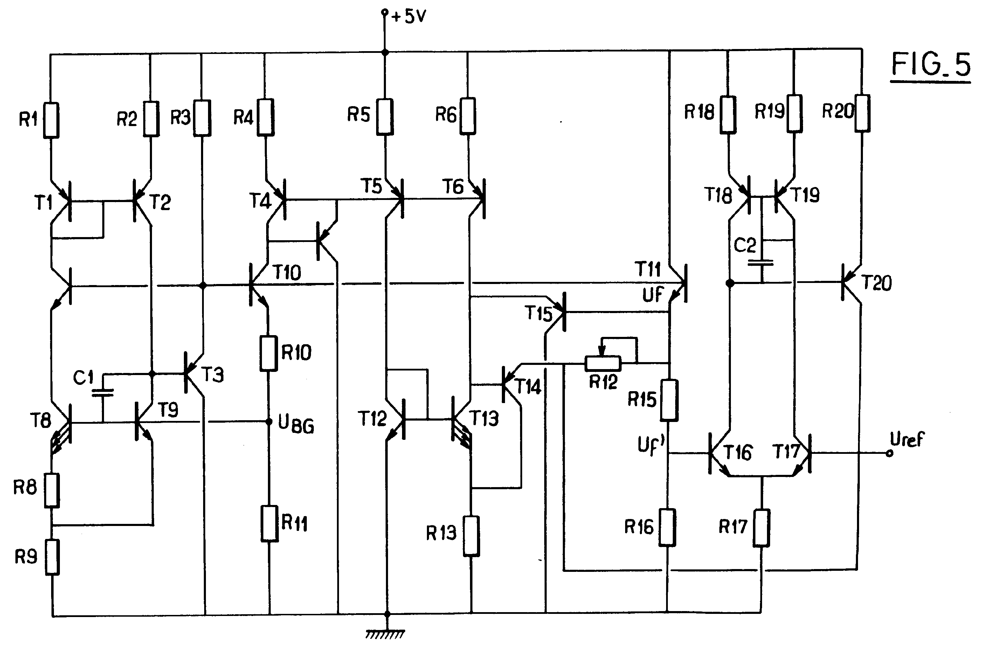

En référence tout d'abord à la figure 1, on a représenté une partie d'un circuit intégré de régulateur d'alternateur constituant le générateur d'une tension de référence variant en fonction de la température selon une loi prédéterminée.

Les transistors PNP T1 à T7 constituent en association avec des résistances R1 à R7 des sources de courant.

Autour de T3, T8, T9, C4, R8 et R9 est articulé un générateur d'une tension fixe, c'est-à-dire dont la valeur est rigoureusement indépendante de la température. Dans le présent exemple, il s'agit d'une tension dite de "Band Gap" prise sur la base de T8 et T9. Cette tension est notée UBG et a une valeur par exemple de 1,26 volts.

Cette tension, multipliée par un coefficient déterminé au niveau des résistances R10 et R11, est reproduite via une paire de transistors T10 et T11 au niveau de l'émetteur de T11. La tension obtenue sur ledit émetteur est notée Uf.

L'émetteur de T11 est relié à une première borne d'une résistance R12 dont la seconde borne est reliée d'une part au générateur de courant T7, R7, d'autre part à l'émetteur d'un transistor PNP T14 et enfin à une borne de sortie pour la tension de référence Uref.

Deux transistors NPN T12 et T13 reçoivent respectivement deux valeurs de courant identiques sur leurs collecteurs, fournies par R5, T5 et R6, T6, respectivement. Les bases de T12, T13 sont reliées au collecteur de T12. L'émetteur de T12 est reliée directement à la masse, tandis que l'émetteur de T13 est reliée à la masse via une résistance R13. La base de T14 est reliée au collecteur de T13, et le collecteur de T14 est relié à l'émetteur de T13.

On observe que T12 est un transistor à émetteur unique, tandis que T13 comporte plusieurs émetteurs, par exemple au nombre de 10.

Le fonctionnement du circuit décrit ci-dessus est le suivant.

Il faut préciser tout d'abord que la valeur de R13 est choisie pour qu'à une température pivot, choisie par exemple égale à 20°C, la tension aux bornes de R13, égale à la différence entre la tension émetteur-base de T12 et la tension émetteur-base de T13, corresponde à un courant dans R13 qui soit précisément égal à la somme des courants fournis par les générateurs de courant R6, T6 et R7, T7.

On comprend que la différence précitée est positive étant donné que la densité de courant dans T13 est inférieure à celle dans T12 du fait du plus grand nombre d'émetteurs, et qu'il en résulte une valeur plus faible pour la tension émetteur-base de T13.

Lorsque la température augmente par rapport au pivot précité, la tension émetteur-base diminue plus fortement dans T13 que dans T12. Il en résulte que la tension aux bornes de R13 augmente. En conséquence, un supplément de courant dans R13, par rapport aux courants issus des générateurs R6, T6 et R7, T7, est nécessaire. Ce courant ne peut être soutiré qu'à travers R12 et T11. Il en résulte que la tension Uref à la seconde borne de R12 est égale à la tension fixe délivrée par T11 diminuée d'une chûte de tension proportionnelle au courant traversant R12 (de droite à gauche sur la figure).

Bien entendu, le raisonnement effectué ci-dessus pour le cas où la température augmente peut être transposé au cas d'un abaissement de la température au-dessous de 20°C. Plus précisément, un abaissement de la température provoque un accroissement proportionnel des tensions émetteur-base dans T12 et T13, mais avec une variation plus forte dans T13. La tension aux bornes de R13 diminue donc, et une partie du courant, issu de R7, T7, qui traverserait normalement R13 via T14, est dérivé à travers R12 et R14 vers la masse. Ainsi Uref est égale à la tension fixe à l'émetteur de T11 augmentée de la tension ainsi engendrée aux bornes de R12.

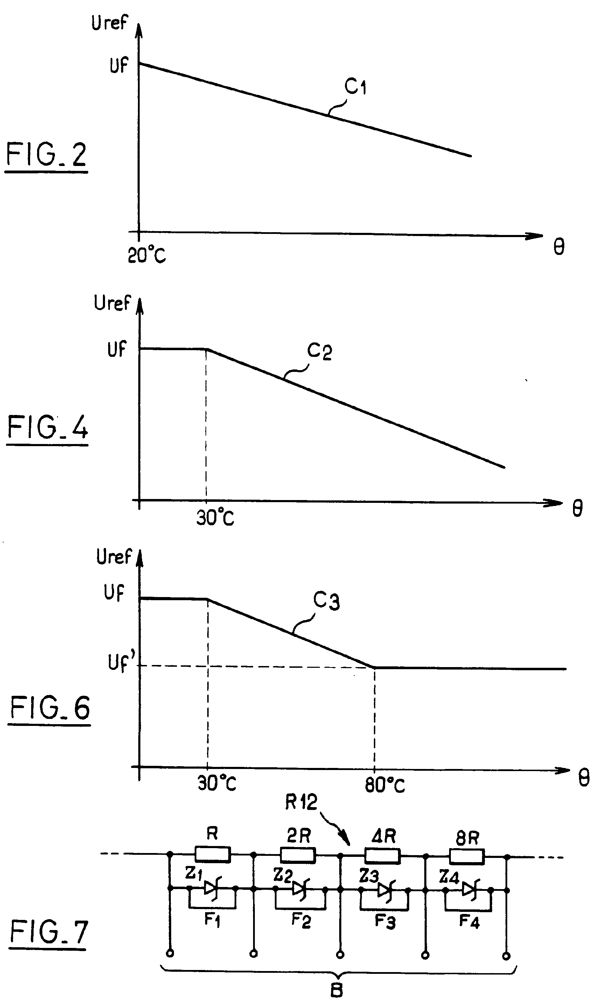

Il est à noter que la linéarité de variation des tensions émetteur-base en fonction de la température se traduit par une linéarité de l'accroissement du courant dans R12 (dans un sens ou dans l'autre) avec l'accroissement de l'écart de température (vers le haut ou vers le bas) par rapport à la valeur pivot de 20°C. La courbe caractéristique de la valeur de Uref en fonction de la température Θ est donc une droite C1 que l'on a représentée sur la figure 2.

On comprend que la pente de cette droite C1 est déterminée simplement en choissisant une valeur souhaitée pour R12. On décrira plus loin des moyens particulièrement simples et économiques permettant, dans le cadre d'une réalisation sur puce de circuit intégré, de fixer l'une parmi un grand nombre de valeurs possibles pour R12.

On notera subsidiairement que la valeur de la résistance R14 est choisie approximativement égale à la somme des valeurs de R10 et de R11, afin d'équilibrer les jonctions respectives de T10 et de T11, condition nécessaire pour une bonne recopie de la valeur de Uf entre T10 et T11.

La figure 3 illustre un second mode de réalisation de l'invention. Pour l'essentiel, ce circuit reprend les éléments du circuit de la figure 1, et l'on décrira ci-dessous les seules différences de construction par rapport à celui-ci.

Le circuit de la figure 3 a pour objet d'obtenir une caractéristique dans laquelle Uref soit constante au-dessous d'une température fixée, relativement élevée et par exemple de 30°C, et, au-dessus de 30°, diminue de façon linéaire avec l'accroissement de température par rapport à cette valeur.

Dans ce cas, le générateur de courant R7, T7 est omis. Un transistor additionnel T15, de type PNP est monté avec sa base reliée à l'émetteur de T11, son émetteur relié au générateur de courant R6, T6 et son collecteur relié à la masse.

La valeur de R13 est cette fois-ci fixée de telle sorte qu'à la température critique de 30°C, le seul courant fourni par le générateur de courant R6, T6 soit propre à engendrer aux bornes de R13 une tension égale à la différence entre la tension émetteur-base de T12 et la tension émetteur-base de T13.

Lorsque la température est inférieure à 30°C, les deux tensions émetteur-base augmentent, de façon linéaire mais avec une plus forte amplitude pour T13. La tension aux bornes de R13 diminue donc et une partie du courant fourni par R6, T6 est dérivé pour ne pas traverser R13. Cette dérivation s'effectue via T15.

On comprend que, dans ce cas, et quelle que soit l'importance de la baisse de température, le transistor T14 est bloqué et aucun courant n'est produit dans R12, si bien que, pour toute la plage de températures inférieure à 30°C, la valeur de la tension Uref reste sensiblement égale à la valeur de la tension fixe Uf.

Lorsqu'en revanche, la température monte au-dessus de 30°C, alors la tension aux bornes de R13 augmente, et un courant doit être soutiré pour s'ajouter au courant fourni par R6, T6. Dans ce cas, ce courant ne peut provenir que du circuit T11, R12 et T14, si bien qu'il circule dans R12, de la droite vers la gauche sur la figure 3, un courant proportionnel à l'écart entre la température réelle et la valeur critique de 30°C.

On comprend donc que Uref diminue linéairement avec cet écart.

La courbe caractéristique C2 correspondante est illustrée sur la figure 4.

De même que pour le cas de la figure 1, il suffit de faire varier R12 pour amener la pente de la droite obtenue pour Θ>30°C à une valeur souhaitée.

La figure 5 illustre un troisième mode de réalisation principal de la présente invention.

Dans ce cas, il s'agit d'obtenir une courbe caractéristique de la tension de référence en fonction de la température telle que:
- pour Θ inférieure à une valeur fixe, par exemple de 30°, Uref soit à une première valeur constante prédéterminée, égale à Uf;
- pour Θ comprise entre 30°C et une valeur supérieure, par exemple comprise entre 70°C et 90°C, et en l'espèce choisie égale à 80°C, Uref diminue linéairement avec la valeur de l'écart de température par rapport à 30°C; et
- pour Θ supérieure à 80°C, Uref soit à nouveau constante et égale à une valeur Uf′ inférieure à Uf.

Le circuit de la figure 5 reprend l'ensemble des éléments du circuit de la figure 3, quine seront pas décrits à nouveau.

Les éléments additionnels sont décrits ci-dessous. La résistance R14 est remplacée par R15 et R16 en série, dont la somme des valeurs est approximativement égale à la somme de R10 et de R11.

La base du transistor NPN T16 est reliée au point commun entre R15 et R16. Son émetteur est relié à la masse via une résistance R17. Le point commun entre R12 et T14 est relié d'une part à la base d'un transistor NPN T17 sont l'émetteur est relié à l'émetteur de T16, et d'autre part à la borne de sortie pour Uref. T16 et T17 sont montés en amplificateur différentiel, en recevant sur leurs bases respectives d'une part la tension Uf′<Uf, et d'autre part la tension prise sur la borne de R12 côté T14.

R18, T18 et R19, T19 constituent des générateurs de courant qui appliquent une même valeur de courant aux collecteurs de T16 et T17. Le collecteur de T18 est relié à la base d'un transistor PNP T20 associé à une résistance d'émetteur R20. Le collecteur de T20 est relié à la borne de sortie pour Uref, à la base de T17 et au point commun entre R12 et T14.

Le fonctionnement du circuit pour des valeurs de température inférieures à 80°C est le même que pour le circuit de la figure 3, et ne sera pas décrit à nouveau. On retrouve donc sur la courbe de la figure 6 une courbe C3 constituée par une droite de pente nulle au-dessous de 30° et une droite de pente négative donnée (fixée là encore par la valeur de R12) au-dessus de 30°C.

En revanche, dès que la température atteint la seconde valeur critique, par exemple de 80°C, le fonctionnement est affecté par le complément de circuit décrit ci-dessus. Plus précisément, tant que Uref reste supérieure à Uf′, alors T16 est bloqué et aucun courant ne peut circuler par la base de T20. T20 est donc bloqué.

Dès que Uref, par suite d'un accroissement de Θ, devient inférieur à Uf′, alors T16 est passant et entraine également à l'état passant le transistor T20. Ce dernier laisse passer un courant qui, via T14, vient circuler dans R13 en correspondance avec l'accroissement de la tension à ses bornes.

Ainsi, au delà d'une valeur de Uref égale à Uf′, tout supplément de courant nécessaire dans R13 est fourni par le circuit R20, T20, T14. Le courant dans R12 se stabilise donc, et la valeur de la tension Uref reste essentiellement constante.

La figure 6 illustre le profil obtenu pour Uref en fonction de la température, appelé classiquement courbe en "Z".

On a ainsi décrit des circuits qui permettent d'engendrer des profils variés de tension de référence en fonction de la température. Ces profils trouveront application en fonction des exigences liées notamment au placement de la batterie dans le véhicule, et au risque qu'elle peut avoir d'être exposée à des températures variables et dont de voir sa résistance interne varier, et également aux risques d'échauffement des alternateurs eux-mêmes, notamment dans le cas d'alternateurs de petites dimensions dont les capacités d'évacuation de chaleur sont limitées.

On va maintenant décrire en référence à la figure 7 une mise en oeuvre pratique de la résistance R12 dans une puce de circuit intégré.

Comme on l'a indiqué plus haut, il peut s'avérer souhaitable de faire varier la pente de décroissance de Uref en fonction de la température, dans l'une quelconque des formes de réalisation décrites ci-dessus.

R12 est dans ce cas constituée par un montage série d'un certain nombre de résistances, en l'espèce quatre résistances R à 8R, dont les valeurs forment une suite géométrique dont le pas est égal à deux.

Quatre fusibles, en l'espèce quatre métallisations F1 à F4 superposées à quatre diodes zéner Z1 à Z4, sont montées en parallèle avec chacune des résistances. Cinq bornes d'accès B permettent sélectivement d'injecter dans les diodes zéner les courants requis pour échauffer les diodes à une température suffisante pour faire fondre et couper les métallisations F1 à F4.

On comprend qu'une telle solution, par action appropriée sur les diodes zéner et leurs métallisations, permet de fixer pour R12 l'une parmi quinze valeurs, respectivement égales à R, 2R, 3R, ....., 14R, 15R, pour ainsi obtenir quinze pentes différentes.

Une telle solution est particulièrement simple et économique, car elle permet généralement d'obtenir, avec N résistances, 2^{N} - 1 valeurs possibles pour la résistance.

## Revendications

1. Circuit générateur d'une tension de référence variable en fonction de la température, notamment pour un dispositif régulateur de la tension de charge d'une batterie par un alternateur, comprenant une source de tension fixe (Uf) quelle que soit la température, caractérisé en ce qu'il comprend en outre :
- deux transistors bipolaires (T12, T13) dont les bases sont reliées entre elles et dont les jonctions base-émetteur ont des comportements en température différents, et recevant chacun sur son collecteur un courant constant,
- une première résistance (R13) montée entre l'émetteur de l'un (T13) des transistors et un potentiel fixe, et dont la tension aux bornes est représentative de la température à laquelle sont exposés les deux transistors, tandis que l'émetteur de l'autre transistor (T12) est relié directement au potentiel fixe,
- une seconde résistance (R12) dont une première borne est reliée à la source de tension fixe et dont une seconde borne est reliée à l'émetteur dudit premier transistor (T13) via une autre transistor (T14), et constitue une sortie pour la tension de référence, et dans laquelle peut circuler, dans au moins une plage de températures prédéterminée, un courant égal au supplément de courant induit par un accroissement de la tension aux bornes de ladite première résistance par rapport à une tension correspondant à une température critique.

2. Circuit selon la revendication 1, caractérisé en ce que les deux transistors sont prévus dans un circuit intégré et en ce que l'un des transistors (T13) est un transistor multi-émetteurs.

3. Circuit selon l'une des revendications 1 et 2, caractérisé en ce que dans la seconde résistance (R12) peut circuler également, dans le sens opposé, un courant de dérivation induit par une diminution de la tension aux bornes de ladite première résistance par rapport à ladite tension correspondant à la température critique (fig. 1).

4. Circuit selon l'une des revendications 1 et 2, caractérisé en ce qu'il comprend en outre un transistor (T15) dans lequel peut circuler, sans traverser ladite seconde résistance (R12), un courant de dérivation induit par une diminution de la tension aux bornes de ladite première résistance par rapport à ladite tension correspondant à la température critique (fig. 3).

5. Circuit selon la revendication 4, caractérisé en ce qu'il comprend en outre des moyens (T16-T20) pour limiter la valeur du courant traversant la seconde résistance à une valeur donnée.

6. Circuit selon la revendication 5, caractérisé en ce que lesdits moyens comprennent deux transistors bipolaires (T16, T17) montés en amplificateur différentiel, la base de l'un étant reliée à la sortie pour la tension de référence et la base de l'autre étant reliée via un pont diviseur (R15, R16) à la source de tension fixe, la sortie dudit amplificateur différentiel étant reliée à un transistor (T20) dans lequel peut circuler, lorsque la tension de référence atteint une valeur de tension (Uf′) déterminée par le pont diviseur et sans traverser la seconde résistance, un courant égal au supplément de courant induit par un accroissement de la tension aux bornes de ladite première résistance par rapport à une valeur pour laquelle ladite tension de référence est égale à ladite valeur de tension déterminée par le pont diviseur (fig. 5).

7. Circuit selon l'une des revendications 1 à 6, caractérisé en ce qu'il comprend des moyens (R-8R, Z1-Z4,F1-F4) pour fixer la valeur de la seconde résistance à l'une parmi une pluralité de valeurs, et ainsi déterminer une pente de décroissance linéaire de ladite tension de référence dans au moins une plage de températures prédéterminée.

8. Circuit selon la revendication 7, caractérisé en ce que lesdits moyens pour fixer la valeur de la seconde résistance à l'une parmi une pluralité de valeurs comprennent un ensemble de composants (F1-F4) pouvant être sélectivement coupés, montés chacun en parallèle avec l'une parmi une pluralité de résistances en série (R-8R).

9. Circuit selon la revendication 8, caractérisé en ce que les valeurs desdites résistances (R-8R) forment une suite géométrique dont le pas est égal à 2.

10. Dispositif régulateur de la tension de charge d'une batterie par un alternateur, caractérisé en ce qu'il comprend un circuit générateur de tension de référence selon l'une des revendications précédentes.

## Patentansprüche

1. Schaltung zur Erzeugung einer temperaturabhängigen Referenzspannung, vor allem zur Regulierung der Batterieladungsspannung von einem Wechselstromgenerator, enthaltend eine Spannungsquelle für eine temperaturunabhängige Festspannung (Uf), **dadurch gekennzeichnet,** daß sie außerdem die folgenden Bestandteile umfaßt:
- zwei bipolare Transistoren (T12, T13), deren Basen untereinander verbunden sind und deren Basis-Emitter-Übergänge unterschiedliche Temperaturverhalten aufweisen und die jeweils an ihren Kollektor einen konstanten Strom erhalten,
- einen ersten Widerstand (R13), der zwischen dem Emitter eines (T13) der Transistoren und einem festen Potential geschaltet ist und dessen Klemmenspannung repräsentativ für die Temperatur ist, der die beiden Transistoren ausgesetzt sind, während der Emitter des anderen Transistors (T12) direkt mit dem festen Potential verbunden ist,
- einen zweiten Widerstand (R12), von dem ein Anschluß mit der Festspannungsquelle verbunden ist und von dem ein zweiter Anschluß mit dem Emitter des genannten ersten Transistors (T13) über einen anderen Transistor (T14) verbunden ist und einen Ausgang für die Referenzspannung bildet, und in dem zumindest in einem vorgegebenen Temperaturbereich ein Strom fließen kann, der gleich dem Zusatzstrom ist, der durch einen Anstieg der Klemmenspannung des genannten ersten Widerstands im Verhältnis zu einer Spannung entsprechend einer kritischen Temperatur induziert wird.

2. Schaltung nach Anspruch 1 , **dadurch gekennzeichnet,** daß die zwei Transistoren in einer integrierten Schaltung vorgesehen sind und daß einer der Transistoren (T13) ein Multiemitter-Transistor ist.

3. Schaltung nach einem der Ansprüche 1 und 2 , **dadurch gekennzeichnet,** daß in dem zweiten Widerstand (R12) außerdem in Gegenrichtung ein Abzweigstrom fließen kann, der durch eine Verringerung der Klemmenspannung des genannten ersten Widerstands im Verhältnis zu der genannten Spannung entsprechend der kritischen Temperatur induziert wird (Fig. 1).

4. Schaltung nach einem der Ansprüche 1 und 2 , **dadurch gekennzeichnet,** daß sie außerdem einen Transistor (T15) enthält, in dem ohne Durchgang durch den genannten zweiten Widerstand (R12) ein Abzweigstrom fließen kann, der durch eine Verringerung der Klemmenspannung des genannten ersten Widerstands im Verhältnis zu der genannten Spannung entsprechend der kritischen Temperatur induziert wird (Fig. 3).

5. Schaltung nach Anspruch 4 , **dadurch gekennzeichnet,** daß sie außerdem Mittel (T16-T20) enthält, um den Wert des durch den zweiten Widerstand hindurchgehenden Stroms auf einen gegebenen Wert zu begrenzen.

6. Schaltung nach Anspruch 5 , **dadurch gekennzeichnet,** daß die genannten Mittel zwei bipolare Transistoren (T16, T17) enthalten, die als Differentialverstärker geschaltet sind, wobei die Basis eines dieser Transistoren mit dem Ausgang für die Referenzspannung verbunden ist und die Basis des anderen Transistors über eine Teilerbrücke (R15, R16) mit der Festspannungsquelle verbunden ist, wobei der Ausgang des genannten Differentialverstärkers mit einem Transistor (T20) verbunden ist, in dem, wenn die Referenzspannung einen Spannungswert (Uf′) erreicht, der durch die Teilerbrücke bestimmt wird, und ohne Durchgang durch den zweiten Widerstand ein Strom gleich dem Zusatzstrom fließen kann, der durch einen Anstieg der Klemmenspannung des genannten ersten Widerstands im Verhältnis zu einem Wert induziert wird, bei dem die genannten Referenzspannung gleich dem durch die Teilerbrücke bestimmten Spannungswert ist (Fig. 5).

7. Schaltung nach einem der Ansprüche 1 bis 6 , **dadurch gekennzeichnet,** daß sie Mittel (R-8R, Z1-Z4, F1-F4) enthält, um den Wert des zweiten Widerstands auf einen Wert aus einer Mehrzahl von Werten festzulegen und so eine Steigung für die lineare Verringerung der genannten Referenzspannung in mindestens einem vorbestimmten Temperaturbereich zu bestimmen.

8. Schaltung nach Anspruch 7 , **dadurch gekennzeichnet,** daß die genannten Mittel, um den Wert des zweiten Widerstands auf einen Wert aus einer Mehrzahl von Werten festzulegen, eine Gruppe von Bauteilen (F1-F4) enthalten, die selektiv ausgeschaltet werden können und die jeweils parallel mit einem Widerstand geschaltet sind, der zu einer Mehrzahl von in Reihe geschalteten Widerständen (R-8R) gehört.

9. Schaltung nach Anspruch 8 , **dadurch gekennzeichnet** daß die Werte der genannten Widerstände (R-8R) eine geometrische Folge bilden, deren Inkrement gleich 2 ist.

10. Vorrichtung zur Regulierung der Batterieladungsspannung von einem Wechselstromgenerator, **dadurch gekennzeichnet,** daß sie eine Schaltung zur Erzeugung einer Referenzspannung nach einem der vorangehenden Ansprüche enthält.

## Claims

1. A circuit for generating a reference voltage that varies as a function of temperature, in particular for regulating the voltage at which a battery is charged by an alternator, comprising a source of a voltage that is fixed (Uf) regardless of temperature, the circuit being characterized in that it further comprises:
two bipolar transistors (T12, T13) whose bases are interconnected and whose base-emitter junctions have different temperature behaviors, with each receiving a constant current via its collector;
a first resistor (R13) connected between a fixed potential and the emitter of one of the transistors (T13), with the voltage across the terminals thereof being representative of the temperature to which the two transistors are exposed, whilst the emitter of the other transistor (T12) is connected directly to the fixed potential; and
a second resistor (R12) with a first terminal that is connected to the fixed voltage source and with a second terminal that is connected to the emitter of said first transistor (T13) via another transistor (T14), and that constitutes an output for the reference voltage, and through which a current may flow, at least over a predetermined range of temperatures, which current is equal to the additional current induced by an increase in the voltage across the terminals of said first resistor relative to a voltage which corresponds to a critical temperature.

2. A circuit according to claim 1, characterized in that the two transistors are provided in an integrated circuit, and in that one of the transistors (T13) is a multi-emitter transistor.

3. A circuit according to claim 1 or 2, characterized in that a diverted current may also flow through the second resistor (R12) in the opposite direction, which diverted current is induced by the voltage across the terminals of said first resistor falling relative to said voltage corresponding to the critical temperature (Figure 1).

4. A circuit according to claim 1 or 2, characterized in that it further includes a transistor (T15) through which a diverted current may flow without flowing through the second resistor (R12), the diverted current being induced by the voltage across the terminals of said resistor falling relative to said voltage corresponding to the critical temperature (Figure 3).

5. A circuit according to claim 4, characterized in that it further includes means (T16-T20) for limiting the value of the current flowing through the second resistor to a given value.

6. A circuit according to claim 5, characterized in that said means comprise two bipolar transistors (T16, T17) connected as a differential amplifier, the base of one of them being connected to the output for the reference voltage and the base of the other one of them being connected via a divider bridge (R15, R16) to the source of fixed voltage, the output of said differential amplifier being connected to a transistor (T20) through which a current may flow without passing through the second resistor whenever the reference voltage reaches a voltage value (Uf′) set by the divider bridge, which current is equal to the additional current induced by an increase in the voltage across the terminals of said first resistor relative to a value at which said reference voltage is equal to said voltage set by the divider bridge (Figure 5).

7. A circuit according to any one of claims 1 to 6, characterized in that it includes means (R-8R, Z1-Z4, F1-F4) for fixing the resistance of the second resistor at one value selected from a plurality of values, thereby determining the slope at which said reference voltage falls off linearly, at least in a predetermined temperature range.

8. A circuit according to claim 7, characterized in that said means for fixing the resistance of the second resistor at one value selected from a plurality of values comprise a set of components (F1-F4) capable of being selectively interrupted, and each connected in parallel with a corresponding one of a plurality of resistors (R-8R) connected in series.

9. A circuit according to claim 8, characterized in that the resistances of said resistors (R-8R) constitute a geometrical progression with a unit ratio of two.

10. A regulator for regulating the voltage at which a battery is charged by an alternator, the regulator being characterized in that it includes a reference voltage generator according to any preceding claim.
